# FASCICULE DE BREVET EUROPEEN

(11) **EP 0 638 035 B1**
(45) Date de publication et mention de la délivrance du brevet: **05.06.1996**
(21) Numéro de dépôt: 93906659.3
(22) Date de dépôt: 24.03.1993
(51) Int. Cl.: B60T 13/573

(54) **DISPOSITIF PERFECTIONNE DE TRANSMISSION D'EFFORT POUR SERVOMOTEUR**
KRAFTÜBERTRAGUNGSGLIED FÜR EINEN BREMSKRAFTVERSTÄRKER
IMPROVED EFFORT TRANSMISSION DEVICE FOR SERVOMOTOR

(30) Priorité: 30.04.1992 FR 9205325
(43) Date de publication de la demande: 15.02.1995
(73) Titulaire: ALLIEDSIGNAL EUROPE SERVICES TECHNIQUES, F-93700 Drancy (FR)
(72) Inventeur: GAUTIER, Jean-Pierre, F-93600 Aulnay-sous-Bois (FR); VERBO, Ulysse, F-93600 Aulnay-sous-Bois (FR); PEREZ REVILLA, Miguel, F-95100 Argenteuil (FR)
(74) Mandataire: Bentz, Jean-Paul
(86) Numéro de dépôt international: FR9300293
(87) Numéro de publication internationale: WO9322172

(56) Documents cités:
- EP-A- 0 318 681
- DE-A- 1 655 429
- US-A- 4 271 670
- PATENT ABSTRACTS OF JAPAN vol. 8, no. 47 (M-280)(1484) 2 Mars 1984, & JP-A-58 202 146 (JIDOSHA KIKI) 25 November 1983

## Description

La présente invention concerne un dispositif de transmission d'effort pour un servomoteur pneumatique d'assistance au freinage, comprenant :
- une tige de commande susceptible, à partir d'une position de repos, de subir un déplacement axial sous l'effet d'un effort d'entrée, cette tige étant terminée par un palpeur présentant une face axiale d'extrémité qui constitue une première surface d'appui amont,
- un piston pneumatique mobile suivant une direction axiale, depuis une position de repos, sous l'effet d'une différence de pression commandée par le déplacement axial de la tige de commande, ce piston étant susceptible de recevoir une poussée minimale non nulle pour un déplacement actif minimal non nul de la tige de commande, et présentant une surface annulaire axiale qui entoure la première surface d'appui amont et constitue une seconde surface d'appui amont,
- un disque de réaction présentant une face amont et une face aval, la face amont étant destinée à recevoir des efforts appliqués par les première et seconde surfaces d'appui amont, et la face aval étant destinée à retransmettre ces efforts,
- une tige de poussée présentant une première extrémité solidaire d'un élargissement radial, lequel offre une première surface d'appui aval en appui contre la face aval du disque de réaction, cette tige présentant une seconde extrémité propre à appliquer un effort de sortie supérieur à l'effort d'entrée, et
- des moyens de réglage pour ajuster à une valeur finale souhaitée ladite poussée minimale par réglage de la distance entre une surface d'appui et la face correspondante du disque de réaction, ces moyens de réglage comprenant une coupelle qui enserre le disque de réaction, qui présente un pas-de-vis, et qui permet de modifier cette distance par un vissage ou un dévissage susceptible d'être effectué en aval du disque de réaction.

Un tel dispositif est par exemple décrit dans le brevet US 4 984 506 dont l'enseignement permet un réglage de la poussée minimale reçue par le piston, connue sous le nom de saut, par une action de vissage ou de dévissage relativement aisée car intervenant en aval du disque de réaction, c'est-à-dire du côté de la tige de poussée.

En dépit de son intérêt et de son efficacité, cette technique connue souffre néanmoins d'un défaut résiduel tenant au fait que le réglage conduit à une précontrainte du disque de réaction.

Or, non seulement cette précontrainte peut constituer une cause d'usure prématurée du disque de réaction, mais elle fait également apparaître une poussée initiale sur la tige de poussée, qui intervient en terme parasite dans la valeur du saut lui-même.

Par ailleurs, un dispositif de transmission d'effort du type précédemment défini, dans lequel les moyens de réglage sont conçus pour permettre d'éloigner la première surface d'appui amont de la première extrémité de la tige de poussée sans déplacement relatif de la première surface d'appui aval par rapport à la seconde surface d'appui amont est décrit dans le brevet US 4 271 670.

Bien que ce dispositif connu résolve ainsi les problèmes précédemment évoqués à propos du dispositif du brevet US 4 984 506, il fait intervenir quatre organes différents dont la rotation relative doit être contrôlée, à savoir la coupelle, une bague externe vissée sur la coupelle, la tige de poussée et une vis pour faire varier la longueur de la tige de poussée.

Dans ce contexte, le but de la présente invention est de proposer un dispositif de transmission d'effort pour servomoteur qui permette un réglage du saut aussi simple que possible et néanmoins dépourvu d'effets secondaires indésirables.

A cette fin, le dispositif de l'invention est essentiellement caractérisé en ce que la coupelle présente un rebord cylindrique, une extension radiale percée d'un orifice central et présentant une surface annulaire interne qui constitue la première surface d'appui aval, et un manchon cylindrique taraudé débouchant sur l'orifice central et dans lequel est vissée la première extrémité de la tige de poussée, cette extrémité constituant une seconde surface d'appui aval.

D'autres caractéristiques et avantages de l'invention ressortiront clairement de la description qui en est faite ci-après, à titre indicatif et nullement limitatif, en référence aux dessins parmi lesquels :
- la Figure 1 est une vue en coupe d'un servomoteur conforme à un premier mode de réalisation, non revendiqué;
- la Figure 2 est une vue en coupe détaillée d'un dispositif conforme au premier mode de réalisation, et
- la Figure 3 est une vue en coupe détaillée d'un dispositif conforme à un second mode de réalisation correspondant à l'invention.

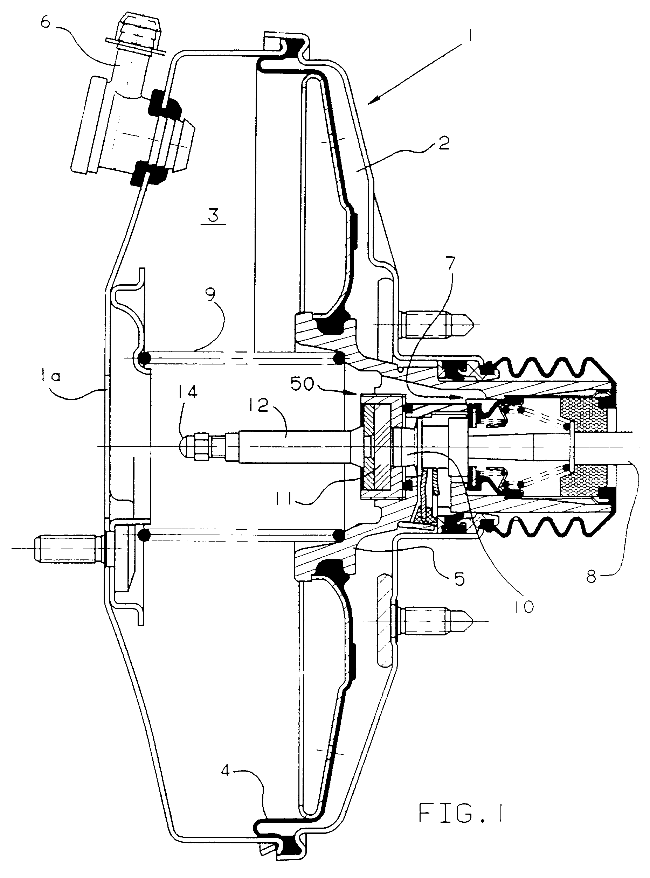

L'invention concerne un perfectionnement apporté aux servomoteurs pneumatiques d'assistance au freinage dont la Figure 1 illustre un exemple conforme à l'invention.

Toutefois, la constitution générale et le fonctionnement des servomoteurs étant bien connus de l'homme de l'art, ils ne seront rapidement rappelés ici que pour permettre une compréhension totale du perfectionnement que représente l'invention.

Schématiquement, un servomoteur comprend une enveloppe rigide 1 séparée en deux chambres 2 et 3, de façon étanche en fonctionnement, par une membrane 4 solidaire d'un piston 5 mobile à l'intérieur de l'enveloppe.

La chambre avant 3, dont la face avant est, en fonctionnement, fermée de façon étanche par son montage sur un maître-cylindre (non représenté), est en permanence raccordée à une source de dépression (non représentée) à travers un raccord 6.

La pression dans la chambre arrière 2 est contrôlée par un clapet 7, commandé par une tige de commande 8, laquelle est reliée à la pédale de frein.

Lorsque la tige de commande 8 est en position de repos, en l'occurrence tirée vers la droite, le clapet 7 établit une communication entre les deux chambres 2 et 3 du servomoteur.

La chambre arrière 3 étant alors soumise à la même dépression que la chambre avant 2, le piston 5 est repoussé vers la droite, en position de repos, par un ressort 9.

L'actionnement de la tige de commande vers la gauche a pour effet, dans un premier temps, de déplacer le clapet 7 de façon qu'il isole l'une de l'autre les chambres 2 et 3 puis, dans un deuxième temps, de déplacer ce clapet de façon qu'il ouvre la chambre arrière 3 à la pression atmosphérique.

La différence de pression entre les deux chambres alors ressentie par la membrane 4 exerce sur le piston 5 une poussée qui tend à le déplacer vers la gauche en comprimant le ressort 9.

L'effort de freinage qu'exerce, par l'intermédiaire d'un plongeur 10, la tige de commande 8 à destination du maître-cylindre, et l'effort d'assistance au freinage résultant de la poussée du piston 5, sont appliqués sur la face amont (droite) d'un disque de réaction 11 dont la face aval (gauche) retransmet ces efforts à la tige de poussée 12, laquelle a pour fonction d'actionner le maître-cylindre lui-même.

En fait, l'effort d'assistance exercé par le piston 5 n'apparaît qu'après un déplacement axial non nul de la tige de commande 8 et prend, lorsqu'il apparaît, une valeur minimale non nulle, appelée "saut", que l'invention se propose de régler de façon simple et efficace.

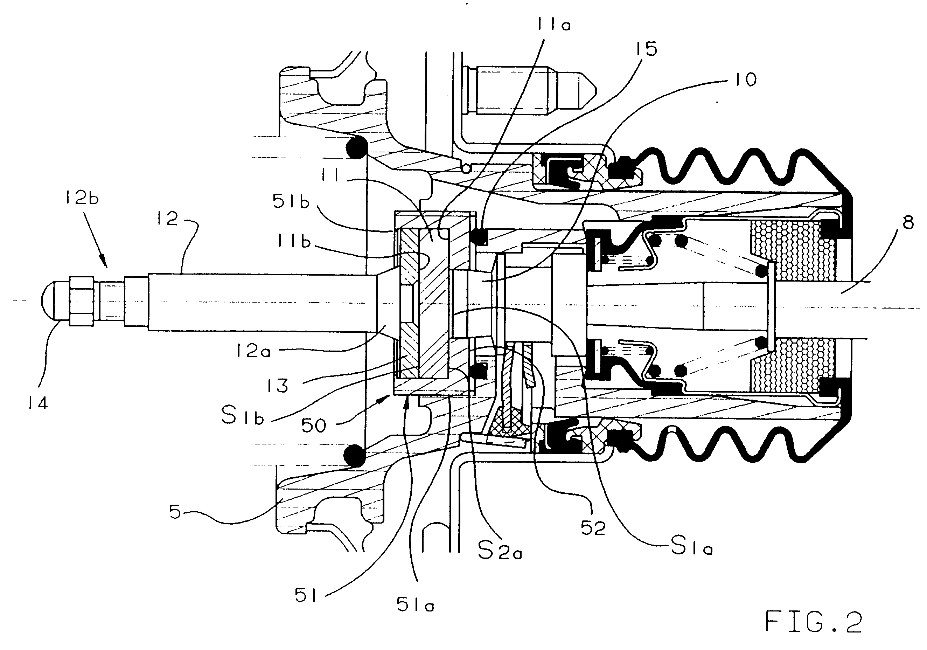

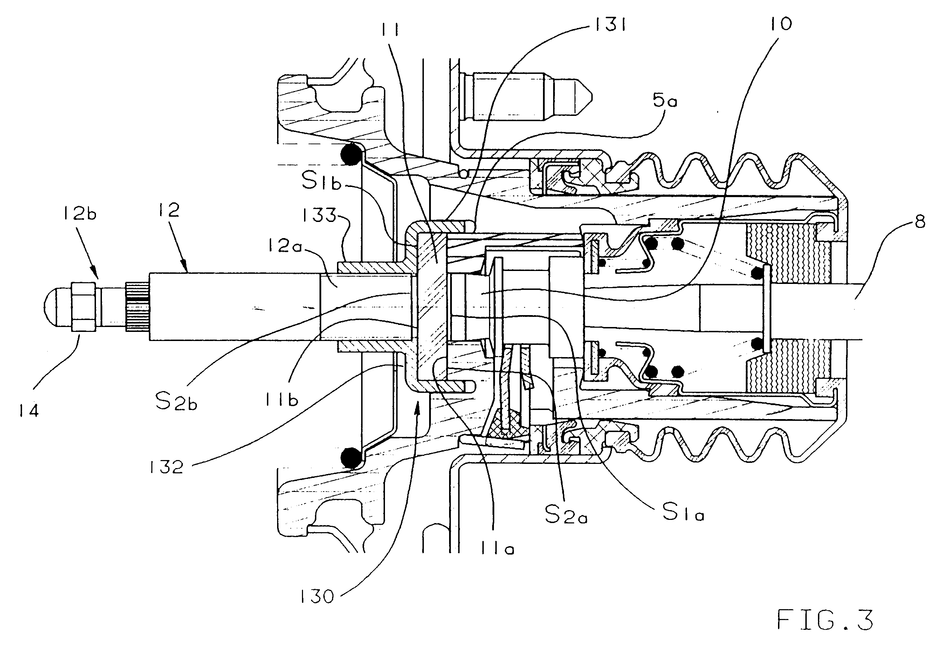

L'invention, qui concerne essentiellement la chaîne de transmission d'effort que constituent ensemble la tige de commande 8, le plongeur 10, le piston 5, le disque de réaction 11 et la tige de poussée 12 peut maintenant être détaillée en référence aux Figures 2 et 3.

Le palpeur 10 présente une face axiale d'extrémité S1a qui constitue une première surface d'appui amont, tandis que le piston présente une surface annulaire axiale S2a, qui entoure la face S1a du palpeur et qui constitue une seconde surface d'appui amont.

Le disque de réaction 11 présente une face amont 11a et une face aval 11b, la face amont 11a étant destinée à recevoir les efforts appliqués par les première et seconde surfaces d'appui amont S1a et S2a.

La première extrémité 12a de la tige de poussée 12 est solidaire d'un élargissement radial rigide 13 qui offre une première surface d'appui aval S1b en appui contre la face aval 11b du disque de réaction 11.

La tige de poussée 12 est terminée, à sa seconde extrémité 12b, par une vis axiale 14 destinée à permettre le réglage de la longueur de cette tige.

Dans le premier mode de réalisation (Figure 1), le piston 5 comprend un organe additionnel adoptant la forme d'une coupelle 50 fonctionnellement assimilable à une partie du piston 5.

Cette coupelle présente d'une part un rebord essentiellement cylindrique 51 portant un profil de préhension et un filetage externe 51a par lequel elle est vissée sur le piston, et d'autre part une paroi 52 orientée axialement et percée d'un orifice central que traverse le palpeur 10, la surface annulaire interne de cette paroi 52 constituant la seconde surface d'appui amont S2a.

Par ailleurs, le rebord 51 présente une légère restriction radiale 51b, permettant à la coupelle d'enserrer l'empilement que constituent le disque de réaction 11 et l'élargissement radial 13.

Enfin, un joint torique élastique 15 est prévu entre la coupelle 50 et le reste du piston 5 pour assurer l'étanchéité entre ces deux éléments.

Les conditions dans lesquelles cet agencement développe tous ses avantages sont les suivantes.

La valeur du saut étant susceptible, de façon connue, d'être modifiée par modification de la distance entre la face S1a du palpeur et la face amont 11a du disque de réaction 11 dans les conditions d'équilibre illustrées sur la Figure 2, l'invention prévoit par construction de donner à cette distance, calculée avec l'hypothèse que la coupelle 50 est vissée à fond dans le piston, une valeur inférieure à celle pour laquelle le saut prend la valeur finale souhaitée.

Il suffit alors, au montage du servomoteur, de ne visser la coupelle 50 que jusqu'au point où le saut atteint sa valeur finale souhaitée, ou de dévisser la coupelle si elle a été vissée à fond.

Dans la mesure où la coupelle 50 porte à la fois l'élargissement radial 13 et le disque de réaction 11, cette coupelle peut être vissée et dévissée sans que la distance séparant la première surface d'appui aval S1b de la seconde surface d'appui amont S2a soit modifiée.

Le réglage du saut peut ainsi être réalisé au montage du servomoteur de la façon suivante (Figure 1).

Un manchon portant un douille de serrage externe, un organe de serrage interne et une jauge, est introduit à travers l'ouverture la de l'enveloppe 1 dans l'espace formé par l'intérieur du ressort 9.

Ce manchon ferme la chambre 3 de façon étanche et cette chambre est mise en communication avec une source de dépression.

Des efforts étalonnés sont ensuite appliqués sur la tige de commande 8 pendant que les efforts de sortie correspondants exercés par la tige de poussée 12 sont mesurés.

La valeur réelle du saut et son écart avec sa valeur souhaitée ayant ainsi été déterminés, de façon connue en soi, la douille de serrage externe est commandée pour entraîner la coupelle 50 en rotation et assurer la correction nécessaire.

Enfin, après mesure conventionnelle des cotes à ajuster, l'organe de serrage interne agit sur la vis 14 pour réaliser cet ajustage, pendant que la coupelle 50 et la tige 12 sont maintenues en rotation.

Dans le second mode de réalisation de l'invention (Figure 3), la seconde surface d'appui amont S2a est constituée par le corps du piston 5 lui-même, et la première surface d'appui aval S1b est constituée par la surface annulaire interne d'une extension radiale 132 d'une coupelle 130.

Cette coupelle présente un rebord cylindrique 131 qui enserre le disque de réaction 11 et s'engage dans un logement 5a du piston.

La paroi 132 est percée en son centre d'un orifice sur lequel débouche un manchon cylindrique taraudé 133, orienté axialement, et dans lequel est vissée la première extrémité 12a de la tige de poussée 12, cette extrémité constituant une seconde surface d'appui aval S2b.

Selon ce second mode de réalisation de l'invention, le saut peut être réglé par dévissage de la tige de poussée 12 dans le manchon 133 à partir d'une position initiale dans laquelle les surfaces d'appui aval S1b et S2b sont coplanaires, sans aucun déplacement relatif de la première surface d'appui aval S1b par rapport à la seconde surface d'appui amont S2a, donc sans contrainte du disque de réaction 11.

## Revendications

1. Dispositif de transmission d'effort pour un servomoteur pneumatique d'assistance au freinage, comprenant :
- une tige de commande (8) susceptible, à partir d'une position de repos, de subir un déplacement axial sous l'effet d'un effort d'entrée, cette tige étant terminée par un palpeur (10) présentant une face axiale d'extrémité qui constitue une première surface d'appui amont (S1a),
- un piston pneumatique (5) mobile suivant une direction axiale, depuis une position de repos, sous l'effet d'une différence de pression commandée par le déplacement axial de la tige de commande, ce piston étant susceptible de recevoir une poussée minimale non nulle pour un déplacement actif minimal non nul de la tige de commande, et présentant une surface annulaire axiale qui entoure la première surface d'appui amont et constitue une seconde surface d'appui amont (S2a),
- un disque de réaction (11) présentant une face amont (11a) et une face aval (11b), la face amont étant destinée à recevoir des efforts appliqués par les première et seconde surfaces d'appui amont, et la face aval étant destinée à retransmettre ces efforts,
- une tige de poussée (12) présentant une première extrémité (12a) solidaire d'un élargissement radial (13, 132), lequel offre une première surface d'appui aval (S1b) en appui contre la face aval du disque de réaction, cette tige présentant une seconde extrémité (12b) propre à appliquer un effort de sortie supérieur à l'effort d'entrée, et
- des moyens de réglage (50, 130) pour ajuster à une valeur finale souhaitée ladite poussée minimale par réglage de la distance entre une surface d'appui et la face correspondante du disque de réaction, ces moyens de réglage comprenant une coupelle qui enserre le disque de réaction, qui présente un pas-de-vis, et qui permet de modifier cette distance par un vissage ou un dévissage susceptible d'être effectué en aval du disque de réaction, et ces moyens de réglage étant conçus pour permettre d'éloigner la première surface d'appui amont (S1a) de la première extrémité (12a) de la tige de poussée sans déplacement relatif de la première surface d'appui aval (S1b) par rapport à la seconde surface d'appui amont (S2a), caractérisé en ce que ladite coupelle (130) présente un rebord cylindrique (131), une extension radiale (132) percée d'un orifice central et présentant une surface annulaire interne qui constitue la première surface d'appui aval (S1b), et un manchon cylindrique taraudé (133) débouchant sur l'orifice central et dans lequel est vissée la première extrémité (12a) de la tige de poussée, cette extrémité constituant une seconde surface d'appui aval (S2b).

2. Dispositif suivant la revendication 1, caractérisé en ce que lesdits moyens de réglage comprennent des moyens (14) pour faire varier la longueur de la tige de poussée.

## Claims

1. Force transmission device for a pneumatic brake-booster, comprising:
- an operating rod (8) which, starting from a position of rest, can undergo axial displacement through the action of an input force, said rod ending in a feeler (10) having an axial end face constituting a first upstream support surface (S1a);
- a pneumatic piston (5) movable in an axial direction from a position of rest through the action of a pressure difference controlled by the axial displacement of the operating rod, said piston being able to receive a minimum non-zero thrust for a minimum non-zero active displacement of the operating rod and having an annular axial surface which surrounds the first upstream support surface and constitutes a second upstream support surface (S2a),
- a reaction disk (11) having an upstream face (11a) and a downstream face (11b), the upstream face being intended to receive forces applied by the first and second upstream support surfaces, and the downstream face being intended to retransmit these forces,
- a thrust rod (12) having a first end (12a) fastened to a radial widening (13, 132) which offers a first downstream support surface (S1b) bearing against the downstream face of the reaction disk, this rod having a second end (12b) adapted to apply an output force greater than the input force, and
- regulation means (50, 130) for adjusting said minimum thrust to a desired final value by regulation of the distance between a support surface and the corresponding face of the reaction disk, said regulation means comprising a cup gripping the reaction disk, having a screw thread, and enabling said distance to be modified by screwing-in or screwing-out, which can be effected downstream of the reaction disk, and these regulation means being designed to permit the first upstream support surface (S1a) to be moved away from the first end (12a) of the thrust rod without relative displacement of the first downstream support surface (S1b) in relation to the second upstream support surface (S2a), characterized in that said cup (130) has a cylindrical rim (131), a radial extension (132) provided with a central aperture and having an annular internal surface which constitutes the first downstream support surface (S1b), and an internally threaded cylindrical sleeve (133) which leads into the central aperture and into which is screwed the first end (12a) of the thrust rod, this end constituting a second downstream support surface (S2b).

2. Device according to Claim 1, characterized in that said regulation means comprise means (14) for varying the length of the thrust rod.

## Patentansprüche

1. Vorrichtung zur Kraftübertragung bei einem pneumatischen Bremsunterstützungs-Servomotor, mit:
- einer Steuerstange (8), die ausgehend von einer Ruhestellung eine axiale Verstellung unter der Wirkung einer Eingangskraft erfahren kann, wobei diese Stange in einem Fühler (10) endet, der eine axiale Stirnseite aufweist, welche eine erste aufwärtige Abstützfläche (S1a) bildet,
- einem Pneumatikkolben (5), der in axialer Richtung aus einer Ruhestellung unter der Wirkung einer Druckdifferenz bewegbar ist, welche von der axialen Verstellung der Steuerstange gesteuert wird, wobei dieser Kolben für eine minimale, von Null verschiedene aktive Verstellung der Steuerstange eine minimale Schubkraft aufnehmen kann und eine axiale ringförmige Fläche aufweist, welche die erste aufwärtige Abstützfläche umgibt und eine zweite aufwärtige Abstützfläche (S2a) bildet,
- einer Reaktionsscheibe (11), welche eine aufwärtige Fläche (11a) und eine abwärtige Fläche (11b) aufweist, wobei die aufwärtige Fläche von der ersten und der zweiten aufwärtigen Abstützfläche aufgebrachte Kräfte aufnehmen kann und die abwärtige Fläche diese Kräfte weiterleiten kann,
- einer Schubstange (12), welche ein erstes Ende (12a) aufweist, welches mit einer radialen Erweiterung (13, 132) fest verbunden ist, welche eine erste abwärtige Abstützfläche (S1b) bietet, welche sich an der aufwärtigen Seite der Reaktionsscheibe abstützt, wobei diese Stange ein zweites Ende (12b) aufweist, welches eine Ausgangskraft aufbringen kann, die größer als die Eingangskraft ist, und
- Regulierungsmitteln (50, 130), um die minimale Schubkraft durch das Regulieren des Abstandes zwischen einer Abstützfläche und der entsprechenden Seite der Reaktionsscheibe auf den gewünschten Endwert einzustellen, wobei die Regulierungsmittel eine Kapsel enthalten, welche die Reaktionsscheibe fest umschließt, einen Gewindegang aufweist und das Verändern dieses Abstands durch ein Einschrauben oder ein Ausschrauben ermöglicht, welches abwärts von der Reaktionsscheibe ausgeführt werden kann, und wobei die Regulierungsmittel so ausgebildet sind, daß sie das Entfernen der ersten aufwärtigen Abstützfläche (S1a) von dem ersten Ende (12a) der Schubstange ohne eine relative Verstellung der ersten abwärtigen Abstützfläche (S1b) bezüglich der zweiten aufwärtigen Abstützfläche (S2a) ermöglicht, dadurch gekennzeichnet, daß die Kapsel (130) einen zylindrischen umgebogenen Rand (131) aufweist sowie einen radialen Fortsatz (132), der von einer Mittelöffnung durchbrochen ist und eine ringförmige Innenfläche aufweist, welche die erste abwärtige Abstützfläche (S1b) bildet, und eine zylindrische, mit einem Gewinde versehene Hülse (133), die an der Mittelöffnung mündet und in welche das erste Ende (12a) der Schubstange eingeschraubt ist, wobei dieses Ende eine zweite abwärtige Abstützfläche (S2b) bildet.

2. Vorrichtung nach Anspruch 1, dadurch gekennzeichnet, daß die Regulierungsmittel Mittel (14) zum Verändern der Länge der Schubstange enthalten.
